# EUROPÄISCHE PATENTANMELDUNG

(11) **EP 1 491 684 A1**
(43) Veröffentlichungstag der Anmeldung: **29.12.2004**
(21) Anmeldenummer: 03014047.9
(22) Anmeldetag: 23.06.2003
(51) Int. Cl.: E01C 7/18, E01C 23/06, C08L 95/00

(54) **Verfahren zur Sanierung von Strassenbelag**

(71) Anmelder: Morant AG, 9000 St. Gallen (CH)
(72) Erfinder: Morant, Markus, 9000 St. Gallen (CH); Schegg, Konrad, 9463 Oberriet SG (DE)
(74) Vertreter: Troesch Scheidegger Werner AG

(57) **Zusammenfassung**

Beim erfindungsgemässen Verfahren wird der alte Belag (1) aufgefräst, das Fräsgut (3) vorzugsweise an Ort belassen und unter Zugabe von Wasser der Feuchtigkeitsgehalt auf einen optimalen Wert eingestellt. Anschliessend wird ein spezielles, mindestens aus Bitumen und tierischen und/oder pflanzlichem Öl oder Fett bestehendes Bindemittel in kaltem Zustand in kleinem Anteil beigegeben und anschliessend gemischt. Das Mischgut wird danach in kaltem Zustand eingewalzt und bildet den erneuerten Belag. Vorteilhaft eignet sich dieses Verfahren insbesondere auch für kleinere Strassenabschnitte, da keine grossen Spezialmaschinen für die Erstellung des Belages notwendig sind. Zudem fällt weniger Abfall an und es werden nur kleine Mengen an neuem Material eingesetzt.

## Beschreibung

Die vorliegende Erfindung betrifft ein Verfahren zur Sanierung von Strassenbelägen nach dem Oberbegriff von Anspruch 1 sowie dessen Verwendung.

Bituminöse Strassenbeläge werden durch den Gebrauch und aufgrund von Witterungseinflüssen stark beansprucht, spröde und erleiden auch teilweise Schäden und müssen nach einer gewissen Zeit saniert oder ersetzt werden.

Beim Ersatz von solchen Belägen muss der alte Belag meistens entfernt werden und ein neuer Belag aufgebracht werden. Derartige Erneuerungen sind sehr aufwändig und es fallen dabei auch sehr grosse Abfallmengen an, welche zur weiteren Verwertung oder Entsorgung abgeführt werden müssen.

Gerade für kleinere Strassenabschnitte ist eine Wiederaufbereitung an Ort in der Regel zu aufwändig, so dass in der Regel der bestehende Belag abgetragen wird, die alten Materialien entsorgt und neue Materialien zugeführt werden.

Grundsätzlich kann unter zwei Typen von der Wiederaufbereitung bei bituminöse Bindemittel enthaltenden Strassenbelägen unterschieden werden, nämlich den "heissen" Verfahren sowie den "kalten" Verfahren.

Bei allen Verfahren wird zuerst der sanierungsbedürftige Teil des Strassenbelages bis zu einer gewissen Tiefe aufgefräst. Dieser gefräste Altbelag wird meist entsorgt oder in ein Asphaltwerk geführt, seltener wird es an Ort aufbereitet.

Bei den "heissen" Verfahren wird entweder vollständig neues Material oder gemischt mit altem Material zusammen erhitzt und mit neuem Bindemittel vermischt und auf den Untergrund aufgebracht. Dabei wird auch das Bindemittel heiss eingesetzt, d.h. es muss auf eine Temperatur von in der Regel mindestens 140° C aufgeheizt werden. Dies kann in einem Asphaltwerk oder mit grossen Spezialmaschinen vor Ort erfolgen. Durch die grosse Hitze und die Zusammensetzung dieser bituminösen Bindemittel entweicht oder verdunstet ein Teil der Kohlenwasserstoffverbindungen in die Umgebung was zu einer nachteiligen Belastung der Umwelt führt. Weiter ist für die Erhitzung der Zuschlagsstoffe die Aufbringung von grosser Heizenergie notwendig, und das Vermischen sowohl des abgefrästen oder aufgebrochenen Materials und das Zugeben des Bindemittels ist sehr aufwändig und wird daher in der Regel durch grosse Kombinationsmaschinen oder in einem Asphaltwerk durchgeführt. Diese Maschinen eignen sich für die Behandlung von grossen Strassenabschnitten, lassen sich aber gerade für kleinere Strassenabschnitte nicht mehr effizient und ökonomisch einsetzen.

Zur Vermeidung mindestens eines Teils der Umweltbelastung ist aus der EP 0 568 767 ein Bindemittel zur Herstellung von Asphaltsplittbelag bekannt, welches mindestens ein tierisches und/oder pflanzliches Fett oder Öl enthält. Durch diesen Zusatz lässt sich ein Asphaltbelag bei Temperaturen um 100° C verarbeiten, also zwar auch in heissem Zustand, aber mit weit geringeren Emissionen an die um Umwelt. Grundsätzlich müssen also auch hier noch Heizmittel für die Herstellung eines Asphaltbelages eingesetzt werden, mit den eben beschriebenen Nachteilen.

Bei den "kalten" Verfahren wird versucht, den Belag ohne heisse Zuschlagsstoffe oder heisse Bindemittel zu erstellen. D.h. es werden Bindemittel eingesetzt, welche sich in kaltem Zustand, d.h. bei normalen Aussentemperaturen verarbeiten lassen. Als solche Bindemittel werden beispielsweise Zement, bituminöse Emulsionen oder Schaumbitumen eingesetzt. Diese Stoffe resp. Bindemittel werden nun vollständig als neue Bindemittel eingesetzt, und bei der erneuten Verwendung des abgefrästen alten Strassenbelages dient das alte Bitumen lediglich als Füllmaterial für den neuen Belag. Das hat zur Folge, dass ein verhältnismässig grosser Anteil an Bindemittel für die Erstellung des neuen Belages eingesetzt werden muss.

So ist ein derartiges Verfahren beispielsweise aus der EP 1 052 334 bekannt, bei welchem grundsätzlich ein kaltes Mischverfahren beschrieben ist, welches aber dennoch Heizmittel zur Aufheizung lediglich der Bindemittel auf über 150° C aufweist. Zur Durchführung dieses Verfahrens wie auch der darin beschriebenen anderen Verfahren sind wiederum verhältnismässig grosse und aufwändige Maschinen, in der Regel sogar ganze Maschinenzüge notwendig. Dies macht den Einsatz bereits für kleinere Abschnitte oder Flächen unwirtschaftlich. Weiter wird dabei das ursprüngliche Bindemittel des abgetragenen Belages nicht mehr verwendet, sondern nur das neue Bindemittel mit dem bereits erwähnten relativ hohen Anteil im Verhältnis zum Altmaterial eingesetzt.

Die Aufgabe der vorliegenden Erfindung lag nun darin, ein Verfahren zur Sanierung von Strassenbelägen zu finden, welches sich einfach anwenden lässt, einen möglichst hohen Anteil des alten Belages und des alten Bitumens wieder verwertet und mit einem möglichst kleinen Maschinenpark zu realisieren ist.

Diese Aufgabe wird erfindungsgemäss durch ein Verfahren mit den Merkmalen nach Anspruch 1 gelöst. Bevorzugte Ausführungsformen ergeben sich aus den Merkmalen der weiteren Ansprüche 2 bis 9.

Durch die Verarbeitung aller Materialien, inklusive dem Bindemittel, ohne zusätzliche Erhitzung, kann das Verfahren mit einfachen Maschinen durchgeführt werden. Es hat sich überraschend gezeigt, dass auch ohne Erhitzung des alten Belages und des Bindemittels ein haltbarer Strassenbelag geschaffen werden kann.

Durch den Einsatz unter normalen Umgebungstemperaturen werden unerwünschte Emissionen vermieden. Durch den Einsatz von Bindemitteln mit einem Anteil von tierischen und/oder pflanzlichem Fett oder Öl wird das im gefrästen Material noch vorhandene Bindemittel reaktiviert und trägt zur Verbindung des Strassenbelages bei. Damit kann mit einem verhältnismässig kleinen Anteil von diesem neuen Bindemittel gearbeitet werden, was zudem noch die natürlichen Resourcen schont.

Damit wird ein ökologisch und ökonomisch vorteilhaftes Verfahren zur Sanierung von Strassenbelägen bereitgestellt. Damit entfallen ebenfalls Transportwege zum Abtransport von Altmaterial und Heranschaffung von grossen Mengen von neuem Material.

Vorzugsweise kann weiteres Altmaterial beigefügt werden, falls das gefräste Material für den neuen Sanierungsaufbau nicht ausreicht.

Allenfalls kann das gefräste Material auch zwischengelagert werden und die Mischung mit Wasser und dem Bindemittel kann in einer Mischeinrichtung erfolgen. Beispielsweise kann dies in einem herkömmlichen Betonmischwerk erfolgen, da keine Erwärmung oder Aufheizung des Bindemittels durchgeführt werden muss. Ein solches Gemisch kann noch ca. 24 Stunden lang verarbeitet werden und eignet sich insbesondere für kleinere Reparaturarbeiten an Strassen.

Vorzugsweise wird dem Bindemittel noch ein kleiner Anteil an mineralischem Öl, beispielsweise Heizöl, beigemischt. Damit wird die Verflüssigungswirkung auf das im gefrästen Material vorhandene Bitumen weiter verstärkt.

Das erfindungsgemässe Verfahren eignet sich gemäss Anspruch 10 vorzugsweise für die Sanierung von bituminösen Strassenbelägen, wie beispielsweise Asphaltbelägen.

Ein Ausführungsbeispiel der vorliegenden Erfindung wird nachstehend anhand von Zeichnungen noch näher beschrieben.
Es zeigen
Fig. 1 schematisch die Ansicht eines Strassenabschnittes mit einem teilweise gefrästen Belag;
Fig. 2 schematisch die Ansicht der Aufbringung von Wasser resp. Bindemittel auf den gefrästen Belag;
Fig. 3 schematisch die Mischung des gefrästen Belages mit eingebrachtem Bindemittel mittels einer kleinen Mischmaschine und
Fig. 4 schematisch die Ansicht einer Pneuwalze auf dem gemischten Strassenbelag.

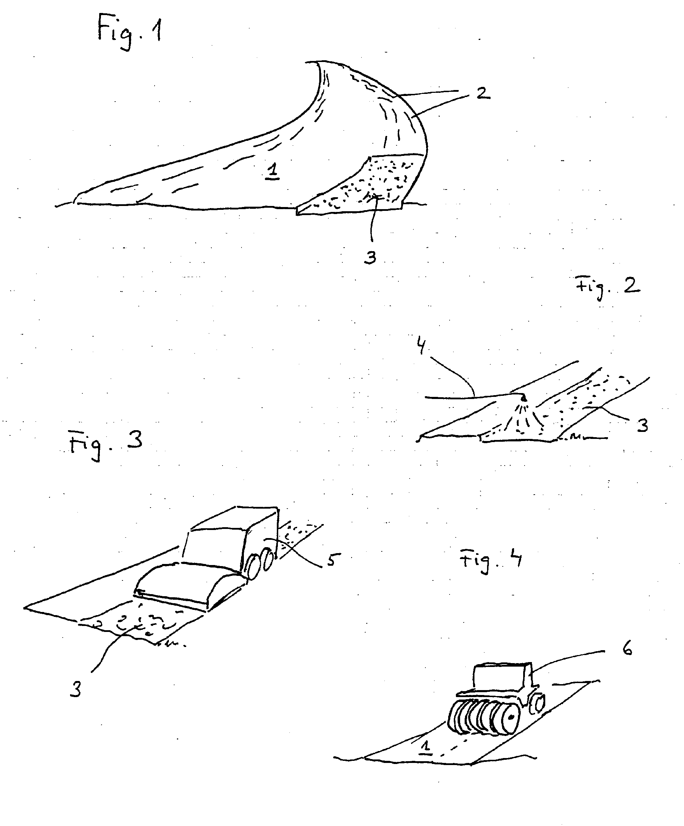

In Figur 1 ist rein schematisch ein Teil eines Strassenverlaufes dargestellt, wobei der Strassenbelag 1 typischerweise an seinen beiden Rändern Risse 2 und Schadstellen aufweist. Gerade wenn nun bei kleineren Strassen nur die Randbereiche saniert werden müssen, ist der Einsatz von grossen Maschinen, beispielsweise ganzen Fertigungszügen entweder gar nicht möglich oder zu kostspielig.

Gemäss dem erfindungsgemässen Verfahren kann nun beispielsweise nur über die Breite des schadhaften Bereiches der Belag aufgefräst werden, wie dies durch den Bereich 3 dargestellt ist. Der Belag wird beispielsweise mit einer Tiefenfräse um einige Zentimeter abgetragen, wobei das gefräste Material vorzugsweise gleich am Ort belassen wird.

Dem gefrästen Material wird anschliessend Wasser zugegeben, beispielsweise mittels einer Sprühvorrichtung 4, wie in Figur 2 rein schematisch dargestellt. Damit wird die für den weiteren Prozess notwendige Feuchtigkeit des gefrästen Materials eingestellt. Anschliessend wird das erfindungsgemässe Bindemittel beigegeben, was ebenfalls über eine Sprühvorrichtung gemäss Figur 2 erfolgen kann.

Als Bindemittel kommt ein Material bestehend aus Bitumen, Polymerzusätzen und vorzugsweise Rapsöl zum Einsatz. Beispielsweise enthält das Gemisch einen Anteil von 10 Gew. % Rapsöl, 60 Gew. % Bitumen und 30 Gew. % Polymerbitumen. Ein solches Gemisch wird vorzugsweise mit einem Anteil von ca. 3,5 - 7 1 auf 1 t gefrästem Material eingesetzt.

Zur Verbesserung der Eigenschaften können zusätzlich noch bis zu 2 1 mineralisches Öl, wie beispielsweise Heizöl, beigefügt werden. Das Beifügen erfolgt kalt, d.h. im Wesentlichen bei herrschenden Umgebungstemperaturen. Damit entfällt jegliches Aufheizen der Bindemittel vor der Zugabe zum gefrästen Material. Neben der Einsparung an entsprechenden Heizmaschinen und Energie hat dies weiter den Vorteil, dass damit keine unerwünschten Emissionen entstehen, wie sie bei der herkömmlichen Verarbeitung von Asphalt auftreten.

Es hat sich gezeigt, dass dieses Bindemittel in kaltem Zustand in der Lage ist, das im gefrästen Material immer noch vorhandene Bindemittel zu reaktivieren und zu verflüssigen, so dass trotz den tiefen Temperaturen eine hohe Viskosität für eine gewisse Zeit erreicht wird.

Nun wird dieses Gemisch gemäss schematischer Darstellung nach Figur 3 mittels einer entsprechenden Maschine 5 vorteilhaft direkt vor Ort gründlich gemischt. Das derart gemischte Gut kann nun anschliessend geknetet und verdichtet werden. Hierfür kann, wie in Figur 4 schematisch dargestellt, eine Pneuwalze 6 für das Kneten des Gemisches eingesetzt werden und dieses anschliessend mittels einer Vibrationswalze definitiv verdichtet werden.

Damit wird ein erneuerter Belag erhalten, welcher praktisch wieder die ursprünglichen Eigenschaften aufweist.

Für eine Sanierung können vorteilhaft lediglich die tatsächlich defekten Belagsteile gefräst werden, lokal in kaltem Zustand vermischt und anschliessend wieder eingebaut und verdichtet werden.

Für kleine derartige Reparaturen kann das gefräste Material auch an einem anderen Ort ggf. zwischen gelagert werden und anschliessend mit dem Bindemittel vermischt werden. Das derartig vorbereitete Gemisch kann dann am Ort wieder auf die Reparaturstelle aufgebracht und verdichtet werden.

Durch den Einsatz des erfindungsgemässen Verfahrens ergeben sich im Vergleich zu herkömmlichen Verfahren bedeutend weniger Transporte und es werden wesentlich weniger Ressourcen verwendet, zudem kann das Verfahren mit kleineren und einfacheren Maschinen durchgeführt werden.

## Patentansprüche

1. Verfahren zur Sanierung von Strassenbelägen, insbesondere von bituminösen Strassenbelägen, bei welchem der alte Strassenbelag mechanisch aufgefräst wird, **dadurch gekennzeichnet, dass**
dem gefrästen Material durch Zugabe von Wasser der Feuchtigkeitsgehalt erhöht wird;
ein Bindemittel bestehend aus Bitumen und tierischem oder pflanzlichem Fett oder Öl zugegeben wird;
das Material und das Bindemittel vermischt wird; und
das Mischgut anschliessend planiert und verdichtet wird.

2. Verfahren nach Anspruch 1, **dadurch gekennzeichnet, dass** ein Bindemittel mit einem Anteil von pflanzlichen und/oder tierischem Fett oder Öl, vorzugsweise Rapsöl, mit einem Anteil zwischen Gew. 2% bis Gew. 30% eingesetzt wird.

3. Verfahren nach Anspruch 1 oder 2, **dadurch gekennzeichnet, dass** ein Bindemittel mit einem zusätzlichen Anteil von mineralischem Öl zwischen Gew. 0% und Gew. 20%

4. Verfahren nach einem der Ansprüche 1 bis 3, **dadurch gekennzeichnet, dass** das Bindemittel in einem Anteil von 0.5 Gew. % bis 1 Gew. % im Verhältnis zum gefrästen Material zugegeben wird, vorzugsweise zwischen 3,5 kg und 7 kg Bindemittel auf 1 t gefrästes Material.

5. Verfahren nach einem der Ansprüche 1 bis 4, **dadurch gekennzeichnet, dass** das Bindemittel in kaltem Zustand, vorzugsweise bei jeweils herrschender Umgebungstemperatur, dem kalten gefrästen Strassenbelag zugegeben wird.

6. Verfahren nach einem der Ansprüche 1 bis 5, **dadurch gekennzeichnet, dass** das Mischgut mittels Vibrationsund/oder Pneuwalzen gewalzt wird, vorzugsweise unter herrschender Umgebungstemperatur.

7. Verfahren nach einem der Ansprüche 1 bis 6, **dadurch gekennzeichnet, dass** vor der Zugabe von Bindemittel und vorzugsweise auch noch vor der Zugabe von Wasser zusätzliches Asphaltgranulat beigefügt wird resp. dem bereits gefrästen Material beigegeben wird.

8. Verfahren nach einem der Ansprüche 1 bis 7, **dadurch gekennzeichnet, dass** das gefräste Material am Ort belassen wird und die anschliessenden Verfahrensschritte direkt am Ort ausgeführt werden.

9. Verfahren nach einem der Ansprüche 1 bis 7, **dadurch gekennzeichnet, dass** das gefräste Material ggf. zwischengelagert wird und anschliessend in einem Mischwerk sowohl das Bindemittel wie auch das Wasser beigefügt und vermischt werden, und anschliessend das Mischgut an den Bestimmungsort zum einbauen und verdichten gebracht wird, wobei die Verarbeitung vorzugsweise innerhalb von 24 Stunden erfolgt.

10. Verwendung des Verfahrens nach einem der Ansprüche 1 bis 9 für die Sanierung von bituminösen Strassenbelägen.
